# EUROPEAN PATENT SPECIFICATION

(11) **EP 1 616 416 B1**
(45) Date of publication and mention of the grant of the patent: **19.11.2008**
(21) Application number: 04760201.6
(22) Date of filing: 19.03.2004
(51) Int. Cl.: H04L 12/56, H04L 12/28, H04Q 7/32, H04Q 7/38

(54) **WIRELESS COMMUNICATION DEVICE SUPPORTING MULTIPLE REGULATORY DOMAINS**
MEHRERE BEHÖRDLICHE DOMÄNEN UNTERSTÜTZENDE DRAHTLOSE KOMMUNIKATIONSEINRICHTUNGEN
DISPOSITIF DE COMMUNICATIONS SANS FIL A DOMAINES DE REGLEMENTATION MULTIPLES

(30) Priority: 24.04.2003 US 422431
(43) Date of publication of application: 18.01.2006
(73) Proprietor: Intel Corporation, Santa Clara, CA 95052 (US)
(72) Inventor: RAJAMANI, Krishnan, San Diego, CA 92130 (US); PONTARELLI, Mark, Escondido, CA 92029 (US); WEBB, John, Escondido, CA 92025 (US); COX, William, Simi Valley, CA 93065 (US)
(74) Representative: Dunlop, Hugh Christopher
(86) International application number: PCT/US2004/008586
(87) International publication number: WO 2004/098136

(56) References cited:
- EP-A- 1 037 482
- EP-A- 1 098 477
- EP-A- 1 298 847
- WO-A-01/43487
- WO-A-98/01002
- WO-A-20/04061700
- US-A- 5 635 940
- US-A- 5 734 980
- US-A- 5 754 956
- US-A1- 2004 039 817
- US-B1- 6 556 825
- CHEVILLAT P ET AL: "The role of radio LANs in the wireless evolution" IEEE CONFERENCE PROCEEDINGS ARTICLE, vol. 1, 15 September 2002 (2002-09-15), pages 489-495, XP010614273
- "IEEE 802.11d-2001 Part 11 Wireless LAN Medium Access Control and Physical Layer specifications. AMENDMENT 3: SPECIFICATION FOR OPERATION IN ADDITIONAL REGULATORY DOMAINS" ANSI/IEEE STD 802.11, XX, XX, 13 July 2001 (2001-07-13), pages 1-34, XP002284884

## Description

### BACKGROUND OF THE INVENTION

It is often desirable to sell a product such as a wireless network interface card for a wireless local area network in multiple countries. However, for wireless communication devices, different regulatory domains have different restrictions upon wireless communications such as allowed channels and power levels. Such limits vary from regulatory domain to regulatory domain. In addition, in some locations, a user may frequently travel between one, two or more regulatory domains. The variation in restrictions among regulatory domains may cause a device that operates in accordance with allowed limits in one regulatory domain to be in violation of the restrictions in another regulatory domain. For a device manufacturer or seller, this has required the manufacture and sale of multiple variations of the same device having multiple stock keeping units for each regulatory domain, which increases costs. Furthermore, users who travel among one, two or more regulatory domains have been required to purchase separate wireless devices for each regulatory domain. Thus, there lies a need for a wireless communication device that is capable of supporting an operating in multiple regulatory domains.

WO 01/43487 describes a wireless communication system that attempts to acquire service from one of a plurality of possible service provider systems using a passive scan. If service is acquired by a less desirable service provider system, the system described constructs an alternative list of more desirable service providers using a passive scan, and attempts to acquire service from a more desirable service provider.

The subject matter regarded as the invention is particularly pointed out and distinctly claimed in the concluding portion of the specification. The invention, however, both as to organization and method of operation, together with objects, and advantages thereof, may best be understood by reference to the following detailed description when read with the accompanying drawings.

### DESCRIPTION OF THE DRAWING FIGURES

FIG. 1 is a block diagram of a network interface card or the like for a wireless local area network;

FIG. 2 is a block diagram of an alternative network interface card or the like for a wireless local area network;

FIG. 3 is a diagram of a table to be stored in a memory of a network interface card in accordance with one embodiment of the present invention; and

FIG. 4 is a flow diagram of a method of operation of a network interface card for a wireless local area network in accordance with an embodiment of the present invention.

It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Some portions of the detailed description that follows are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the following discussions, it is appreciated that throughout the specification discussions utilizing terms such as processing, computing, calculating, determining, or the like, refer to the action or processes of a computer or computing system, or similar electronic computing device, that manipulate or transform data represented as physical, such as electronic, quantities within the computing system's registers or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computing device selectively activated or reconfigured by a program stored in the device. Such a program may be stored on a storage medium, such as, but is not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, or any other type of media suitable for storing electronic instructions, and capable of being coupled to a system bus for a computing device.

The processes and displays presented herein are not inherently related to any particular computing device or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

In the following description and claims, the terms coupled and connected, along with their derivatives, may be used. In particular embodiments, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

It should be understood that embodiments of the present invention may be used in a variety of applications. Although the present invention is not limited in this respect, the circuits disclosed herein may be used in many apparatuses such as in the transmitters and receivers of a radio system. Radio systems intended to be included within the scope of the present invention include, by way of example only, wireless local area networks (WLAN) devices and wireless wide area network (WWAN) devices including wireless network interface devices and network interface cards (NICs), base stations, access points (APs), gateways, bridges, hubs, cellular radiotelephone communication systems, satellite communication systems, two-way radio communication systems, one-way pagers, two-way pagers, personal communication systems (PCS), personal computers (PCs), personal digital assistants (PDAs), and the like, although the scope of the invention is not limited in this respect.

Types of wireless communication systems intended to be within the scope of the present invention include, although not limited to, Wireless Local Area Network (WLAN), Wireless Wide Area Network (WWAN), Code Division Multiple Access (CDMA) cellular radiotelephone communication systems, Global System for Mobile Communications (GSM) cellular radiotelephone systems, North American Digital Cellular (NADC) cellular radiotelephone systems, Time Division Multiple Access (TDMA) systems, Extended-TDMA (E-TDMA) cellular radiotelephone systems, third generation (3G) systems like Wide-band CDMA (WCDMA), CDMA-2000, and the like, although the scope of the invention is not limited in this respect.

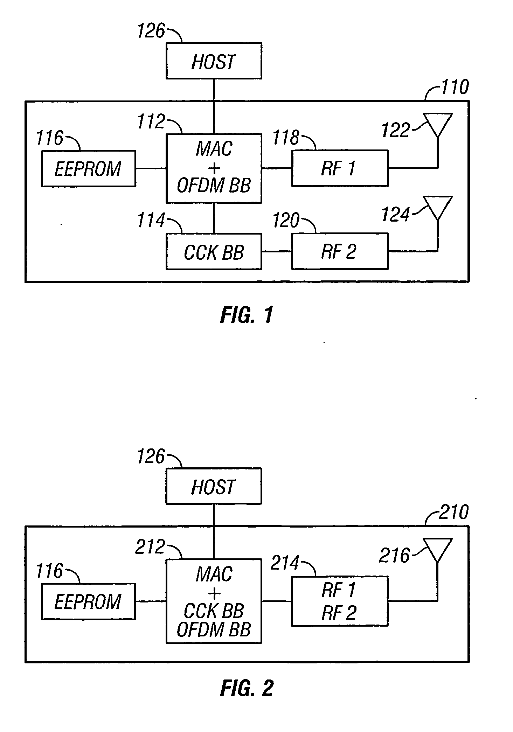

Referring now to FIG. 1, a block diagram of a network interface card for a wireless local area network will be discussed. As shown in FIG. 1, network interface card (NIC) 110 may include block 112 that may include media access control (MAC) layer functions and a baseband (BB) processor for orthogonal frequency division multiplexing (OFDM) signals. For example, block 112 may process OFDM signals in accordance with an IEEE 802.11 and/or IEEE 802.11g standard, although the scope of the invention is not limited in this respect. Block 114 of NIC 110 may include a baseband processor for processing complementary code keying (CCK) signals. For example, block 114 may process CCK signals in accordance with an IEEE 802.11b standard, although the scope of the invention is not limited in this respect. It should be noted that one or more of functional blocks representing the MAC, OFDM BB, and CCK BB may be combined in any combination, for example as three separate blocks, as two blocks or as one block in any combination, and the scope of the invention is not limited in this respect. A first radio-frequency (RF) block 118 may be coupled to block 112 for receiving and transmitting signals at a first frequency, and a second radio-frequency block 120 may be coupled to block 114 for receiving and transmitting signals at a second frequency. For example, block 112 may operate in accordance with an IEEE 802.11a standard and block 114 may operate in accordance with an IEEE 802.11b standard, RF block 118 may include a 5 GHz transceiver and block 120 may include a 2.4 GHz transceiver. In such an arrangement, NIC 110 may be considered as a dual band device. In an alternative embodiment, block 114 may also operate in accordance with an IEEE 802.11g standard, in which case NIC 110 may be considered as a tri-band device. Alternatively, RF blocks 118 and 120 may be a single RF block that is capable of operating in two or more bands corresponding to at least RF block 118 and RF block 120, or additional RF blocks, and the scope of the invention is not limited in this respect. It should be noted that the scope of the invention is not limited to the number of bands at which NIC 110 may operate, such that NIC 110 may operate at any number of bands or frequencies. It should be noted that NIC 110 is not limited to operating in accordance with any particular standard, such that NIC 110 may be arranged to operate in accordance with any one or more wireless LAN standards.

RF block 118 may couple to a first antenna 122 and RF block 120 may couple to a second antenna 124. In an alternative embodiment, RF block 118 and RF block 120 may couple to a single antenna. In another alternative embodiment, RF block 118 and RF block 120 may be connected or coupled to antennas 122 and 124 via a diversity switch block or a frequency band switch block, although the scope of the invention is not limited in this respect. In one embodiment, antennas 122 and 124 may be disposed on or within NIC 110. In an alternative embodiment, antennas 122 and 124 may be disposed external to NIC 110. NIC 110 may also include an non-volatile memory such as electrically erasable programmable read-only memory (EEPROM) 116 which may store data or instructions for block 112. In one embodiment, EEPROM 116 may be a flash memory, although the scope of the invention is not limited in this respect. NIC 100 may couple to a host 126 which may send and receive data via NIC 110 over a wireless local area network. In one embodiment, NIC 110 may be disposed in a self contained device such as a PC card that may be removably insertable into host 126, In an alternative embodiment, NIC 110 may be disposed within 126 by being integrated therewith. Host 126 may be a device such as a laptop computer, a personal digital assistant, or a cellular telephone, although the scope of the invention is not limited in this respect. NIC 110 may be arranged to operate in a relatively large number of regulatory domains, so that one stock keeping unit (SKU) for NIC 110 may be supported in a relatively large number of regulatory domains for operation of NIC 110 in multiple countries.

Referring now to FIG. 2, a block diagram of an alternative network interface card for a wireless local area network will be discussed NIC 210 of FIG. 2 is substantially similar to NIC 110 of FIG. 2, with the differences explained herein. NIC 210 may include MAC layer functions, and OFDM and CCK baseband processors in a single block 212, for example where such functions are combined onto a single chip. Likewise, two or more radio-frequency blocks may be combined into a single block 214, for example where such radios are combined onto a single radio chip. Block 214 may couple to antenna 216 for transmitting and receiving RF signals at the frequencies at which the radios of block 214 may operate, although the scope of the invention is not limited in this respect. In an alternative embodiment, RF block 214 may couple or connect to two or more antennas such as antennas 122 and 124 via a diversity switch block or a frequency band switch block, although the scope of the invention is not limited in this respect. Although FIG. 1 and FIG. 2 show different arrangements for NIC 110 and NIC 112, other arrangements of NIC 110 and NIC 112 are within the scope of the invention. NIC 110 or NIC 210 may communicate with another an access point or base station in a basic services set (BSS) mode, also wise known as an infrastructure mode, or alternatively NIC 110 or NIC 210 may communicate with another host device having compatible NIC in independent basic services set (IBSS) mode, otherwise known as an ad-hoc mode, although the scope of the invention is not limited in this respect, Although FIG. 1 and FIG. 2 show NIC 110 and NIC 210, the invention is not limited to network interface cards. The invention may be embodied in various other forms, for example as a chipset in a portable computer or personal digital assistant, as a wireless LAN enabled telephone ore cellular telephone, as part of an access point or wireless router, and so on, without limiting the scope of the invention.

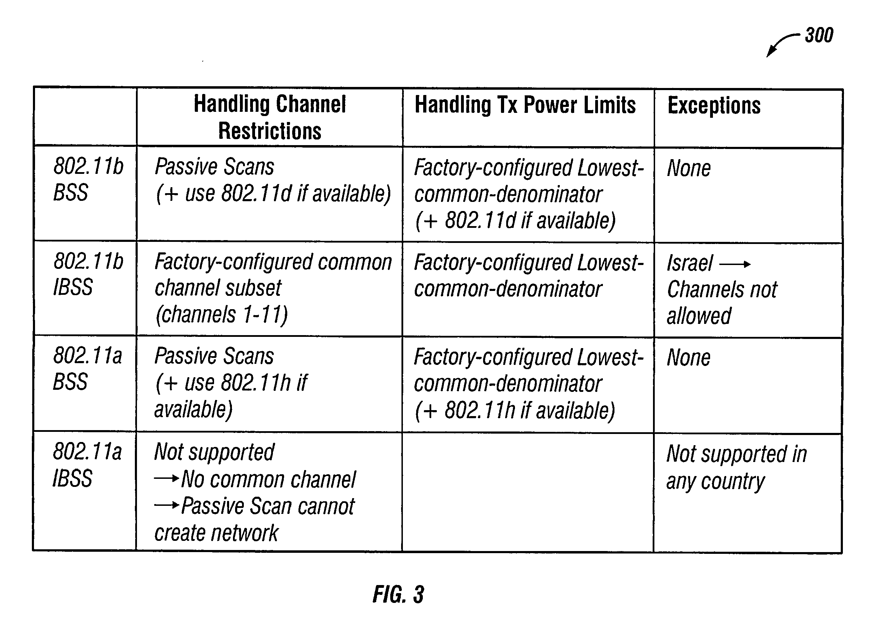

Referring now to FIG. 3, a diagram of a table to be stored in a memory of a network interface card in accordance with an embodiment of the invention will be discussed. In one embodiment of the invention, EEPROM 116 may be populated during the manufacture of NIC 110 with data that includes a table 300 to indicate allowed power levels for that SKU associated with NIC 110. Table 300 may also include the allowed Independent Basic Services Set (IBSS), or ad-hoc mode, channels for that SKU. Table 300 may also include a list of channels to be passively scanned. Upon power-up or reset of NIC 110, MAC software executed by block 112 may read table 300 so that NIC 110 may be arranged to operate in accordance with the parameters in table 300. In one embodiment of the invention, table 300 may include information on handling channel restrictions, handling transmission power limits, and any exceptions to the rules stored in table 300. Such information may be included in table 300 for operating NIC 110 in an IEEE 802.11b BSS mode, for operating NIC 110 in an IEEE 802.11b IBSS mode, and for operating NIC 110 in an IEEE 802.11a BSS mode, although the scope of the invention is not limited in this respect. In one embodiment, table may store information for operating NIC 110 in an IEEE 802.11a IBSS although such a mode is not currently supported in any country. In the event such a mode or other modes are later supported, EEPROM 116 may be updated with information on operating NIC 110 in such later supported modes wherein table 300 may be updated accordingly, although the scope of the invention is not limited in this respect. Although by way of example table 300 of FIG. 3 includes information on how a dual band NIC 110 may be operated in one or several countries or regulatory domains using IEEE 802.11a and IEEE 802.11b modes, the invention is not limited in this respect such that other modes may be substituted, added, or subtracted from table 300 by updating the information stored in EEPROM 116, for example by adding information on operating NIC 110 in other modes such as IEEE 802.11g. IEEE 802.11n, and so on, although the scope of the invention is not limited in this respect.

Table 300 in EEPROM 116 may allow additional SKUs to be created to service any countries that are not satisfied by a single common SKU. Using table 300 in EEPROM 116 may also allow the same MAC layer software for block 112 to be used for all SKUs. In one embodiment, the common SKU may include a 100 mW (20 dBm) power limit as the lowest common denominator for CCK channels, for example IEEE 802.11b, a 50 mW (17 dBm) power limit as the lowest common denominator for OFDM channels, for example IEEE 802.11a, operation in IBSS channels 1 through 11 IBSS for CCK channels, and a passive scan may be enabled for all CCK and OFDM channels, although the scope of the invention is not limited in this respect. In one embodiment, a graphical user interface (GUI) running on host 126 may allow a channel number to be selected by a user for IBSS, and may limit the selection to channels that are valid for the SKU as determined from table 300 stored in EEPROM 116. For example, in one particular embodiment for the common SKU, only CCK channels 1 through 11 may be allowed, although the scope of the invention is not limited in this respect.

In one embodiment, NIC 110 may perform an initial scan. The initial scan may be a passive scan of the channels allowed by table 300 in EEPROM 116. During such a passive scan, if the MAC software in bock 112 receives an access point beacon that includes country information, for example in accordance with an IEEE 802.11d or an IEEE 802.11h standard, NIC 110 may save the received country information in EEPROM 116 for utilization with a subsequent active scan. In the event NIC 110 joins an IBSS network discovered during a scan, the channel number for that IBSS may be the same as that recorded during the scan. In the event an IBSS network is initiated, a user selected channel may be utilized. The power limit for the selected channel may be determined from table 300 stored in EEPROM 116.

After a scan is completed, NIC 110 may select an access point with which to associate in a basic services set (BSS) mode, or infrastructure mode, without regard to any country information or support provided by that access point in accordance with an IEEE 802.11d or IEEE 802.11h standard. NIC 110 may use the channel number recorded for that access point during the scan. In the event country information in accordance with an IEEE 802.11d or IEEE 802.11h standard was saved from any access point during the scan, NIC 110 may utilize the power limit as determined by the information received from the beacon of that access point, regardless of which access point may be selected for association. In the event no country information was discovered or received during the scan, NIC 110 may utilize a channel power limit as determined by table 300 stored in EEPROM 116, although the scope of the invention is not limited in this respect.

In one embodiment, NIC 110 may perform an active scan in the event network country information was already saved, otherwise, a NIC 110 may perform a passive scan. During a passive scan, NIC 110 may scan the channels as specified by the passive scan information in table 300 stored in EEPROM 116. In some instances, a passive scan may be longer in duration than a listen interval supported by the access point, which may result in a loss of data in the event all channels are scanned while in a power save state. To avoid such a data loss, in one embodiment NIC 110 may enter channel access method (CAM) after scanning every eight consecutive channels in the active band, before going back into power save to resume the scan on the next eight channels. In the event an association is lost, NIC 110 may perform subsequent scans. In the event country information was received previously from the network, such subsequent scans may be active scans, otherwise such scans may be passive scans. During a passive scan, NIC 110 may scan the channels allowed in the passive scans portion of table 300 stored in EEPROM 116. In one embodiment, in the event of a link loss, NIC 110 may erase the country information stored in EEPROM 116 and revert to a passive scan at a predetermined time after the link loss, for example ten seconds. Such erasure may handle the situation where a user may be on the border of two adjacent regulatory domains, although the scope of the invention is not limited in this respect. In certain instances, some access points may suppress disclosure of the services set identifier (SSID) in the access point beacon. For passive scans, in one embodiment, such access points are selectively probed using a lowest common denominator power level from table 300 stored in EEPROM 116 to transmit passive scan probes, although the scope of the invention is not limited in this respect.

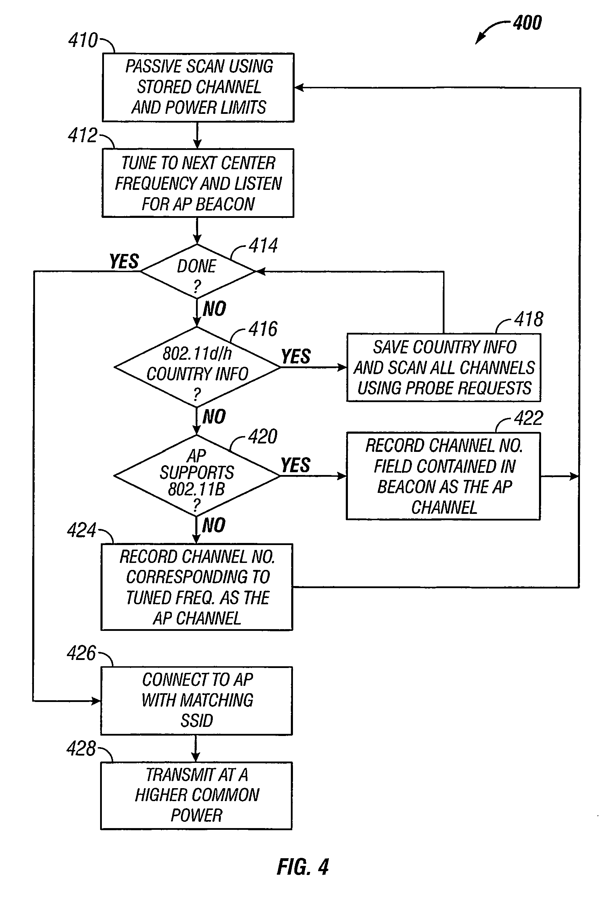

Referring now to FIG. 4, a flow diagram of a method of operation of a network interface card for a wireless local area network will be discussed. Method 300 may initiate with a passive scan at block 410 where NIC 110 may perform scanning using a channel and power limit stored in table 300 in EEPROM 116. In one embodiment, passive scanning may not utilize a power limit wherein NIC 110 may receive signals but may not transmit signals. In an alternative embodiment, during passive scanning or after passive scanning is finished, NIC 110 may be ready to associate with a device, at which time NIC 110 may transmit at a power limit stored in table 300, although the scope of the invention is not limited in this respect. In general during scanning, NIC 10 may tune to the next center frequency and listen for an access point (AP) beacon at block 412. Scanning may continue until a determination is made at block 414 that the channels have been scanned and scanning is done. In one embodiment, even where scanning is done and NIC 110 connects with another device or network, scanning may continue even after a connection is made. When a beacon is heard, a determination is made at step 416 whether the device sending the beacon is transmitting country information, for example in accordance with an IEEE 802.11d. or an IEEE 802.11h standard. In the event country information is received, the country information provided by the access point may be saved to EEPROM 116 at block 418, and then all channels may be scanned using probe requests on the channels and at the power level specified for the country based on the received country information.

In the event no country information is received from the particular device or access point, a determination may be made at block 420 whether the access point supports one of the standards in table 300, for example in the case shown in FIG. 4, an IEEE 802.11b standard. In the event the access point supports or is capable of operating in an IEEE 802.11b standard, the channel number in the beacon of that access point may be recorded and stored in EEPROM 116 as the channel for that particular access point, and scanning may continue for other in range access points at block 412. In the event the access point does not support or is not operating in an IEEE 802.11b mode, a determination may be made whether the access point supports or is capable of operating in an IEEE 802.11a mode. In the event the access points supports or is capable of operating in an IEEE 802.11a mode, the channel number corresponding to the currently tuned frequency is recorded in EEPROM 116 as the channel for that particular access point, and scanning may continue at step 412. In an alternative embodiment, block 420 may further include a determination whether the access point supports or is capable of operating in an IEEE 802.11g mode so that NIC 110 may communicate with the access point in an IEEE 802.11g mode in the event it is determined that the access point supports an IEEE 803.11g mode. NIC 110 may communicate with the access point in either an IEEE 802.11b or an IEEE 802.11g mode using a first set of frequencies or channel numbers, and may communicate with the access point in an IEEE 802.11a mode using a second set of frequencies or channel numbers, although the scope of the invention is not limited in this respect.

When NIC 110 is done scanning, NIC 110 may connect to an access point with a desired or a matching SSID at block 426. When communicating the access point, NIC 110 may transmit a higher common denominator power level, or the highest common denominator power level at block 428 allowed by table 300 in the event no country information power levels were received as determined at block 416. If such country information power level was received at block 416, then communication may occur at a power level as specified for the country corresponding to the received country information, although the scope of the invention is not limited in this respect.

Although the invention has been described with a certain degree of particularity, it should be recognized that elements thereof may be altered by persons skilled in the art without departing from the scope of the invention. It is believed that the wireless communication device supporting multiple regulatory domains of the present invention and many of its attendant advantages will be understood by the forgoing description, and it will be apparent that various changes may be made in the form, construction and arrangement of the components thereof without departing from the scope of the invention or without sacrificing all of its material advantages, the form herein before described being merely an explanatory embodiment thereof, and further without providing substantial change thereto. It is the intention of the claims to encompass and include such changes.

## Claims

1. A method comprising:
scanning using a passive scan on a first set of channels stored in a memory;
identifying in the passive scan channels of the first set of channels on which an access point is broadcasting a beacon including country or regulatory domain information; and
performing an active scan on a second set of channels stored in the memory and on channels identified in said identifying, utilising said country or regulatory domain information.

2. A method as claimed in claim 1, further comprising adding the channels identified in said identifying to the second set of channels stored in the memory.

3. A method as claimed in claim 1, wherein said performing an active scan includes transmitting one or more probe requests.

4. A method as claimed in claim 1, wherein said first set of channels is a higher common denominator channel set for one or more regulatory domains.

5. A method as claimed in claim 1, wherein said second channel set is a higher common denominator channel set for one or more regulatory domains.

6. An article comprising a storage medium having stored thereon instructions that, when executed by a computing platform, result in the performance of the steps of the method of any one of claims 1 to 5.

7. An apparatus comprising:
means for scanning using a passive scan on a first set of channels stored in a memory;
means for identifying in the passive scan channels of the first set of channels on which an access point is broadcasting a beacon including country or regulatory domain information; and
means for performing an active scan on a second set of channels stored in the memory and on channels identified in said identifying, utilising said country or regulatory domain information.

## Patentansprüche

1. Ein Verfahren umfassend:
das Scannen mithilfe eines passiven Scans auf einem ersten KanalSet, das in einem Speicher gespeichert ist;
im passiven Scan das Ermitteln von Kanälen des ersten KanalSets, auf dem ein Zugangspunkt ein Beacon, das Länder- oder Regulatory Domain-Informationen umfasst, aussendet; und
das Durchführen eines aktiven Scans auf einem zweiten KanalSet, das im Speicher und auf Kanälen, die beim Ermitteln mithilfe der Länder- oder Regulatory Domain-Informationen ermittelt werden, gespeichert ist.

2. Ein Verfahren nach Anspruch 1, ferner umfassend das Hinzufügen der Kanäle, die beim Ermitteln auf dem zweiten KanalSet, das im Speicher gespeichert ist, ermittelt werden.

3. Ein Verfahren nach Anspruch 1, wobei das Durchführen eines aktiven Scans das Übertragen von einer oder mehreren Testanforderungen umfasst.

4. Ein Verfahren nach Anspruch 1, wobei das erste KanalSet für eine oder mehrere Regulatory Domains ein höheres gemeinsames Nenner-KanalSet ist.

5. Ein Verfahren nach Anspruch 1, wobei das zweite KanalSet für eine oder mehrere Regulatory Domains ein höheres gemeinsames Nenner-KanalSet ist.

6. Ein Gegenstand umfassend ein Speichermedium mit darauf gespeicherten Anweisungen, die beim Ausführen durch eine Computerplattform zur Durchführung der Verfahrensschritte nach einem der Ansprüche 1 bis 5 führen.

7. Eine Vorrichtung umfassend:
Mittel zum Scannen mithilfe eines passiven Scans auf einem ersten KanalSet, das in einem Speicher gespeichert ist;
im passiven Scan Mittel zum Ermitteln von Kanälen des ersten KanalSets, auf dem ein Zugangspunkt ein Beacon, das Länder- oder Regulatory Domain-Informationen umfasst, aussendet; und
Mittel zum Durchführen eines aktiven Scans auf einem zweiten KanalSet, das im Speicher und auf den Kanälen, die beim Ermitteln mithilfe der Länder- oder Regulatory Domain-Informationen ermittelt wurden, gespeichert ist.

## Revendications

1. Procédé comprenant :
le balayage utilisant un balayage passif sur un premier ensemble de canaux stockés dans une mémoire ;
l'identification dans le balayage passif de canaux du premier ensemble de canaux sur lequel un point d'accès diffuse une balise comprenant des informations de pays ou de domaines réglementaires ; et
l'exécution d'un balayage actif sur un second ensemble de canaux stockés dans la mémoire et sur des canaux identifiés dans ladite identification, en utilisant desdites informations de pays ou de domaines réglementaires.

2. Procédé selon la revendication 1, comprenant en outre l'addition de canaux identifiés dans ladite identification au second ensemble de canaux stockés dans la mémoire.

3. Procédé selon la revendication 1, dans lequel ladite exécution d'un balayage actif comprend la transmission d'une ou plusieurs demandes de sonde.

4. Procédé selon la revendication 1, dans lequel ledit premier ensemble de canaux est un ensemble de canal de dénominateur commun le plus élevé pour un ou plusieurs domaines réglementaires.

5. Procédé selon la revendication 1, dans lequel ledit second ensemble de canal est un ensemble de canal de dénominateur commun le plus élevé pour un ou plusieurs domaines réglementaires.

6. Article comprenant un support de stockage ayant stocké sur celui-ci des instructions qui, lorsqu'elles sont exécutées par une plate-forme informatique, résultent en l'exécution des étapes du procédé d'une quelconque des revendications 1 à 5.

7. Appareil comprenant :
un moyen pour le balayage utilisant un balayage passif sur un premier ensemble de canaux stockés dans la mémoire ;
un moyen pour identifier dans les canaux de balayage passif du premier ensemble de canaux sur lequel un point d'accès diffuse une balise comprenant des informations de pays ou de domaines réglementaires ; et
un moyen pour exécuter un balayage actif sur un second ensemble de canaux stockés dans la mémoire et sur des canaux identifiés dans ladite identification, en utilisant lesdites informations de pays ou de domaines réglementaires.
